# EUROPEAN PATENT APPLICATION

(11) **EP 4 844 383 A1**
(43) Date of publication of application: **25.11.2026**
(21) Application number: 24918520.8
(22) Date of filing: 18.12.2024
(51) Int. Cl.: G01N 21/892, B41J 29/393

(54) **PRINTED MATTER DEFECT INSPECTION DEVICE, DEFECT INSPECTION METHOD, PROGRAM, AND PRINTING SYSTEM**

(30) Priority: 15.01.2024 JP 2024004076
(71) Applicant: FUJIFILM Corporation, Tokyo 106-8620 (JP)
(72) Inventor: SEKI Masaki, Ashigarakami-gun, Kanagawa 258-8577 (JP)
(74) Representative: HGF
(86) International application number: PCT/JP2024/044706
(87) International publication number: WO 2025/154463

(57) **Abstract**

Provided are a printed matter defect inspection apparatus, a defect inspection method, a program, and a printing system that automatically and highly accurately inspect all printed matters. In a printed matter defect inspection apparatus that inspects each of a plurality of printed matters that are continuously printed at any time by a scan image comparison method of comparing a captured image with a reference image obtained by imaging a correct printed matter to inspect a defect of the printed matter to be inspected, a defect of the printed matter is inspected by a data comparison method of comparing a captured image obtained by imaging a printed matter to be inspected with reference data generated based on print source data of the printed matter, whether the printed matter is defective or not is determined from a result of the inspection by the data comparison method, and a captured image of the printed matter is set as the reference image when it is determined that printed matter is not defective.

## Description

### BACKGROUND OF THE INVENTION

### 1. Field of the Invention

The present invention relates to a printed matter defect inspection apparatus, a defect inspection method, a program, and a printing system, and particularly to a technique of inspecting a defect of a printed matter by comparing a captured image obtained by imaging the printed matter to be inspected with a reference image obtained by imaging a correct printed matter.

### 2. Description of the Related Art

A defect inspection apparatus that inspects a defect of a target by comparing imaging data obtained by imaging the target using a scanner and reference data as a reference has been widely used. An application of an inspection method using this method is a printed matter defect inspection apparatus for inspecting a printing defect such as streaks and ink chipping of a printed matter printed by a printer. In the printed matter defect inspection according to the related art, inspection is widely performed by a scan image comparison method in which reference data, which is imaging data as a reference printed under the same condition, is acquired in advance and the imaging data during printing is compared with the reference data. However, in the scan image comparison method, there is a problem that a comparison inspection cannot be performed in printing in which a pattern changes every time, such as variable printing, and in a first sheet after changing printing conditions.

On the other hand, as a countermeasure for the problem that inspection of the first sheet cannot be performed, a data comparison inspection of comparing digital data input to the printer with the imaging data is widely performed. However, in the data comparison inspection, a difference such as a difference in data format occurs between a color space of four channels of cyan, magenta, yellow, and black (CMYK) and a color space of three channels of red, green, and blue (RGB), and thus, preprocessing for matching the characteristics is required. Regarding the difference between CMYK and RGB, in the related art, a method of matching color characteristics by using a table for matching a color profile between printing data and imaging data is used. However, since the color profile varies depending on a difference in printing conditions and there are various conditions such as a difference in printers and a difference in paper depending on countries, it is difficult to detect a defect with high accuracy.

On the other hand, JP2023-39712A discloses an inspection apparatus that inspects quality of a printed matter printed by a printing apparatus using a reference image and a scan image of the printed matter, the inspection apparatus including selection means for selecting which of a pre-printing image used for printing the printed matter and the scan image is to be used as the reference image in a case of inspecting the quality of the printed matter.

### SUMMARY OF THE INVENTION

In the inspection apparatus disclosed in JP2023-39712A, in a case where a difference is detected as a result of comparing the pre-printing image and the scan image, a reference image selection screen including the pre-printing image and the scan image is displayed, and a user input as to whether or not the detected difference is a defect is received, and the reference image is selected based on the received user input. As described above, in the inspection apparatus disclosed in JP2023-39712A, in order to avoid unnecessary detection of an abnormality, determination is performed based on an input by a user, and there is a problem in that it takes time and effort for the user to determine the detection result and input the determination.

The present invention has been made in view of such circumstances, and an object of the present invention is to provide a printed matter defect inspection apparatus, a defect inspection method, a program, and a printing system that automatically and highly accurately inspect all printed matters.

In order to achieve the above object, according to a first aspect of the present disclosure, there is provided a printed matter defect inspection apparatus that inspects each of a plurality of printed matters that are continuously printed at any time by a scan image comparison method of comparing a captured image obtained by imaging a printed matter to be inspected with a reference image obtained by imaging a correct printed matter to inspect a defect of the printed matter to be inspected, the printed matter defect inspection apparatus comprising: one or more processors; and one or more memories in which a program to be executed by the one or more processors is stored, in which the one or more processors, by executing instructions of the program, are configured to: inspect a defect of the printed matter by a data comparison method of comparing a captured image obtained by imaging a printed matter to be inspected with reference data generated based on print source data of the printed matter; determine pass/fail of the printed matter from a result of the inspection by the data comparison method; and set a captured image of the printed matter determined as a non-defective product as the reference image.

According to the printed matter defect inspection apparatus according to the first aspect, it is possible to automatically and highly accurately inspect all printed matters.

According to a second aspect of the present disclosure, in the printed matter defect inspection apparatus according to the first aspect, it is preferable that the one or more processors are configured to: inspect each of the plurality of printed matters that are continuously printed, by the data comparison method, until the reference image is set; and inspect by the scan image comparison method after the reference image is set.

According to a third aspect of the present disclosure, in the printed matter defect inspection apparatus according to the second aspect, it is preferable that the one or more processors configured to inspect, by the scan image comparison method, a printed matter to be inspected next to the printed matter of the captured image set as the reference image.

According to a fourth aspect of the present disclosure, in the printed matter defect inspection apparatus according to any one of the first to third aspects, it is preferable that the one or more processors are configured to set the reference image for each print source data.

According to a fifth aspect of the present disclosure, in the printed matter defect inspection apparatus according to any one of the first to fourth aspects, it is preferable that the one or more processors are configured to inspect by the data comparison method using a learning model.

According to a sixth aspect of the present disclosure, in the printed matter defect inspection apparatus according to the fifth aspect, it is preferable that the learning model is trained using, as training data, reference data generated based on print source data of a printed matter, a captured image of the printed matter, and an inspection result of the printed matter.

According to a seventh aspect of the present disclosure, in the printed matter defect inspection apparatus according to the sixth aspect, it is preferable that the result of the inspection includes a result of the inspection by the scan image comparison method.

According to an eighth aspect of the present disclosure, in the printed matter defect inspection apparatus according to the sixth or seventh aspect, it is preferable that the result of the inspection includes at least one of presence or absence of a defect, the number of defects, a position of a defect, or a size of a defect.

In order to achieve the above object, according to a ninth aspect of the present disclosure, there is provided a printing system comprising: a printing apparatus that prints a printed matter based on print source data; an imaging device that images the printed matter to acquire a captured image; and the printed matter defect inspection apparatus according to any one of the first to eighth aspects.

In order to achieve the above object, according to a tenth aspect of the present disclosure, there is provided a printed matter defect inspection method that inspects each of a plurality of printed matters that are continuously printed at any time by a scan image comparison method of comparing a captured image obtained by imaging a printed matter to be inspected with a reference image obtained by imaging a correct printed matter to inspect a defect of the printed matter to be inspected, the method comprising: by one or more processors, inspecting a defect of the printed matter by a data comparison method of comparing a captured image obtained by imaging a printed matter to be inspected with reference data generated based on print source data of the printed matter; determining pass/fail of the printed matter from a result of the inspection by the data comparison method; and setting a captured image of the printed matter determined as a non-defective product as the reference image.

In order to achieve the above object, according to an eleventh aspect of the present disclosure, there is provided a program causing a computer to execute the printed matter defect inspection method according to the tenth aspect. The present disclosure also includes a non-transitory computer-readable storage medium in which the program according to the eleventh aspect is stored.

According to the present invention, it is possible to automatically inspect all printed matters with high accuracy.

### BRIEF DESCRIPTION OF THE DRAWINGS

FIG. 1 is an overall configuration diagram of an ink jet printing system.
FIG. 2 is a block diagram showing an internal configuration of the ink jet printing system.
FIG. 3 is a diagram showing a configuration of a defect inspection apparatus.
FIG. 4 is a block diagram showing a functional configuration of the defect inspection apparatus.
FIG. 5 is a flowchart showing each step of a defect inspection method by the defect inspection apparatus.

### DESCRIPTION OF THE PREFERRED EMBODIMENTS

Hereinafter, a detailed description of preferred embodiments of the present invention will be made with reference to the accompanying drawings.

### <Configuration of Ink Jet Printing System>

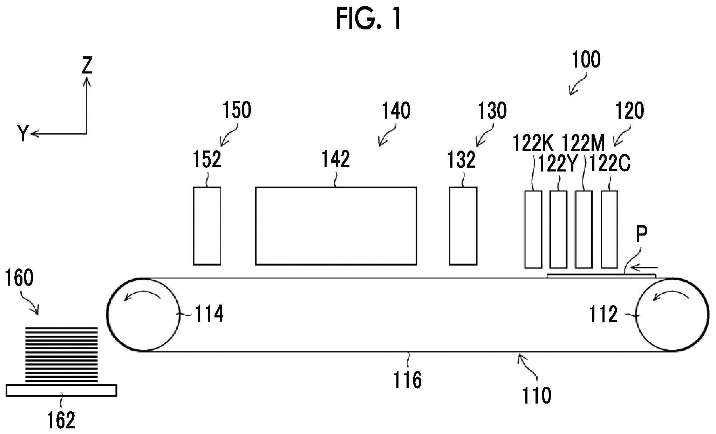

FIG. 1 is an overall configuration diagram of an ink jet printing system 100. The ink jet printing system 100 is a printer that prints a color image by ejecting inks of four colors of cyan (C), magenta (M), yellow (Y), and black (K) onto single-sheet paper P which is a recording medium.

As the paper P, general-purpose printing paper is used. The general-purpose printing paper is not a so-called ink jet dedicated paper and refers to paper mainly made of cellulose, such as coated paper used in general offset printing or the like. Further, aqueous ink is used as the ink. The term "aqueous ink" means an ink obtained by dissolving or dispersing a coloring material, such as a dye and a pigment, in water and a solvent soluble in water.

As shown in FIG. 1, the ink jet printing system 100 is configured to include a transport unit 110, a printing unit 120, an imaging unit 130, a drying unit 140, a sorting unit 150, and a sheet discharge unit 160.

### [Transport Unit]

The transport unit 110 transports paper P supplied from a paper supply unit (not illustrated) in a transport direction. The transport unit 110 includes an upstream pulley 112, a downstream pulley 114, and a transport belt 116.

The upstream pulley 112 includes a rotation axis (not illustrated) extending in a horizontal direction, and the rotation axis is rotatably and pivotally supported. The downstream pulley 114 includes a rotation axis (not illustrated) parallel to the rotation axis of the upstream pulley 112, and the rotation axis is rotatably and pivotally supported.

The transport belt 116 is an endless belt made of stainless steel. The transport belt 116 is stretched between the upstream pulley 112 and the downstream pulley 114. By using the transport belt 116 made of stainless steel, flatness of the paper P can be kept good.

The downstream pulley 114 has a motor (not illustrated) as a driving means. In a case where the motor is driven, the downstream pulley 114 rotates counterclockwise in FIG. 1. The upstream pulley 112 is driven by the rotation of the downstream pulley 114, and rotates counterclockwise in FIG. 1. The transport belt 116 runs between the upstream pulley 112 and the downstream pulley 114 along a running path by the rotation of the upstream pulley 112 and the downstream pulley 114.

The paper P supplied from a paper supply unit (not illustrated) is placed on a transport surface of the transport belt 116. The transport unit 110 transports the paper P placed on the transport belt 116 along a transport path from the upstream pulley 112 toward the downstream pulley 114, and delivers the paper P to the sheet discharge unit 160. The paper P is transported while the printing surface is horizontally held at positions of the transport path facing the printing unit 120, the imaging unit 130, the drying unit 140, and the sorting unit 150.

The transport belt 116 is provided with a plurality of suction holes (not illustrated), and the suction holes of the transport belt 116 are sucked by a pump (not illustrated) so that the paper P placed on the transport surface of the transport belt 116 may be suctioned and held on the transport surface.

### [Printing Unit]

The printing unit 120 is an example of a "printing apparatus" of the present disclosure, and forms (prints) an image on the paper P based on print source data. The printing unit 120 comprises ink jet heads 122C, 122M, 122Y, and 122K. The ink jet head 122C ejects cyan ink droplets by an ink jet method. Similarly, the ink jet heads 122M, 122Y, and 122K eject magenta, yellow, and black ink droplets by the ink jet method, respectively.

The ink jet heads 122C, 122M, 122Y, and 122K are disposed at regular intervals along the transport path of the paper P by the transport belt 116. The ink jet heads 122C, 122M, 122Y, and 122K are line heads, respectively, and are formed to have a length corresponding to the paper width. The ink jet heads 122C, 122M, 122Y, and 122K are disposed such that a nozzle surface on which nozzles (not illustrated) are arranged faces the transport belt 116.

The ink jet heads 122C, 122M, 122Y, and 122K eject ink droplets from nozzles formed on the nozzle surface toward the paper P transported by the transport belt 116 to form an image on the printing surface of the paper P at a predetermined screen pattern.

As described above, the printing unit 120 forms an image on the paper P transported by the transport belt 116 by a so-called single-pass method in one scan. Thereby, a color image is formed on the printing surface of the paper P, and thus the paper P becomes a "printed matter".

### [Imaging Unit]

The imaging unit 130 is an example of an "imaging device" according to the present disclosure, and acquires an image of the printing surface of the paper P, that is, a scan image of the printed matter. The imaging unit 130 is disposed on the downstream side of the printing unit 120 with respect to the transport direction of the paper P. The imaging unit 130 includes a scanner 132.

The scanner 132 is a device that optically reads an image formed on the paper P by using the ink jet heads 122C, 122M, 122Y, and 122K. The scanner 132 includes an imaging device that captures an image printed on the paper P and converts the image into an electric signal. The imaging device may be a color charge coupled device (CCD) linear image sensor or a color complementary metal oxide semiconductor (CMOS) linear image sensor, each having a lightreceiving element array for each of red (R), green (G), and blue (B) with a color filter for each color.

The scanner 132 may include, in addition to the imaging device, an illumination optical system that illuminates a reading target, and a signal processing circuit that processes a signal obtained from the imaging device to generate digital image data.

### [Drying Unit]

The drying unit 140 dries ink on the paper P. The drying unit 140 is disposed on the downstream side of the imaging unit 130 with respect to the transport direction of the paper P.

The drying unit 140 includes a heater 142. As the heater 142, for example, at least one of a halogen heater or an infrared heater is used. The heater 142 heats the printing surface of the paper P to dry the ink on the paper P. The drying unit 140 may include a blowing means such as a fan or a blower.

### [Sorting Unit]

The sorting unit 150 sorts a printed matter according to a pass/fail determination on the paper P transported by the transport belt 116. The sorting unit 150 is disposed on the downstream side of the drying unit 140 with respect to the transport direction of the paper P. The sorting unit 150 includes a stamper 152.

The stamper 152 performs a stamp process of attaching ink to the leading edge of the paper P determined to be a defective product according to the pass/fail determination for the paper P transported by the transport belt 116.

### [Sheet Discharge Unit]

The sheet discharge unit 160 collects the paper P on which the image is formed and dried. The sheet discharge unit 160 is disposed on the downstream side of the sorting unit 150 with respect to the transport direction of the paper P, at the end point of the transport path of the transport unit 110. The sheet discharge unit 160 includes a sheet discharge tray 162.

The sheet discharge tray 162 stacks and collects the paper P transported by the transport belt 116. The sheet discharge tray 162 is provided with a front paper stop, a rear paper stop, and a lateral paper stop (not illustrated), and the sheets of paper P are stacked in an orderly manner.

Further, the sheet discharge tray 162 is provided so as to be movable up and down by a lifting device (not illustrated). The drive of the lifting device is controlled in conjunction with an increase or decrease in the number of sheets of paper P stacked on the sheet discharge tray 162. Thereby, the paper P located at the highest position among the paper P stacked on the sheet discharge tray 162 always has a constant height.

### <Control System of Ink Jet Printing System>

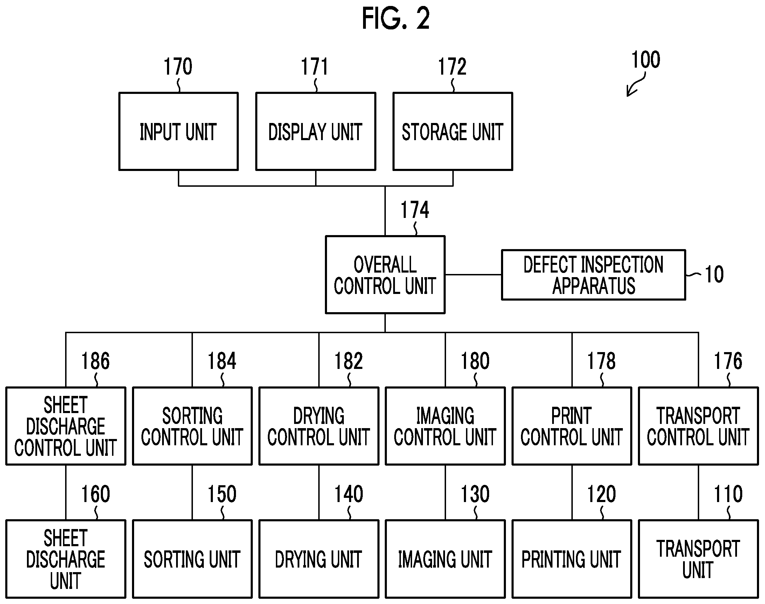

FIG. 2 is a block diagram showing an internal configuration of the ink jet printing system 100. The ink jet printing system 100 comprises a defect inspection apparatus 10, an input unit 170, a display unit 171, a storage unit 172, an overall control unit 174, a transport control unit 176, a print control unit 178, an imaging control unit 180, a drying control unit 182, a sorting control unit 184, and a sheet discharge control unit 186.

The defect inspection apparatus 10 is a device that images a printed matter being printed using a scanner 132 attached perpendicularly to a transport direction to inspect streak defects occurring in the printed matter printed by a single-pass method, and inspects the defects of the printed matter in real time by following the printing from a captured image, and displays the defects. Hereinafter, inspecting the defects of the printed matter may be simply referred to as "inspecting the printed matter". The term "during printing" refers to, for example, a period from when an image is printed on the paper P by the printing unit 120 to when the paper P is collected by the sheet discharge unit 160. The term "during printing" may include a certain time after the paper P is collected by the sheet discharge unit 160. Here, the defect inspection apparatus 10 inspects each of a plurality of printed matters continuously printed by the ink jet printing system 100 at any time. Details of the defect inspection apparatus 10 will be described later.

The input unit 170 is, for example, an operation panel that receives an input for operating the ink jet printing system 100 from a user. The display unit 171 is, for example, a display that displays a scan image and various types of information. The input unit 170 and the display unit 171 are disposed close to each other, and the user can control various types of processing of the ink jet printing system 100 interactively and print a desired image by operating the input unit 170 while visually recognizing the display unit 171.

The storage unit 172 stores a program for controlling the ink jet printing system 100 and information necessary for executing the program. The storage unit 172 is composed of a non-transitory storage medium, such as a hard disk or various semiconductor memories (not illustrated).

The overall control unit 174 performs various types of processing in accordance with the program stored in the storage unit 172 and controls the overall operation of the ink jet printing system 100. The defect inspection apparatus 10 is also controlled by the overall control unit 174.

The transport control unit 176 causes the transport unit 110 to transport the paper P in the transport direction by controlling a motor (not illustrated) of the transport unit 110. With this, the paper P supplied from the paper supply unit (not illustrated) passes through the positions facing the printing unit 120, the imaging unit 130, the drying unit 140, and the sorting unit 150, and is finally discharged to the sheet discharge unit 160.

The print control unit 178 controls ejection of the ink by the ink jet heads 122C, 122M, 122Y, and 122K based on the print source data. The print source data may be stored in the storage unit 172. The print control unit 178 causes the ink jet heads 122C, 122M, 122Y, and 122K to eject the ink droplets of cyan, magenta, yellow, and black toward the paper P at a timing at which the paper P passes through a position facing the nozzle surface of each of the ink jet heads 122C, 122M, 122Y, and 122K.

The print control unit 178 may output information on the location of an ejection-defective nozzle to the overall control unit 174. The defect inspection apparatus 10 may acquire the information on the location of the ejection-defective nozzle from the print control unit 178.

In addition, the print control unit 178 may have a compensatory function of correcting the print source data to compensate for the printing by the ejection-defective nozzle. As an example, the compensatory function compensates for the ejection-defective nozzle by increasing the volume of the ink droplets of a plurality of adjacent nozzles. The print control unit 178 outputs information on the location compensated by the compensatory function of the printed matter, to the overall control unit 174. The defect inspection apparatus 10 may acquire the information on the location compensated by the compensatory function of the printed matter from the print control unit 178.

The imaging control unit 180 causes the imaging unit 130 to image the printed matter. The imaging control unit 180 causes the scanner 132 to read the image formed on the printing surface of the paper P at a timing at which the paper P passes through a position facing the scanner 132.

The drying control unit 182 causes the drying unit 140 to dry the paper P by controlling heating by the heater 142. The heater 142 heats the paper P in a case where the paper P passes through the position facing the heater 142.

The sorting control unit 184 causes the sorting unit 150 to sort the paper P by controlling stamp processing by the stamper 152. The sorting control unit 184 classifies the printed matter into a non-defective product and a defective product according to the inspection result output from the defect inspection apparatus 10. The sorting control unit 184 performs the stamp process by the stamper 152, in a case where the paper P passing through the position facing the stamper 152 is paper P determined to be the defective product.

The sheet discharge control unit 186 controls stacking of the paper P by the sheet discharge tray 162. The paper P is discharged onto the sheet discharge tray 162, and is stacked. The ink is attached to the leading edge of the defective product paper P. Therefore, the user can specify the defective product from the paper P stacked on the sheet discharge tray 162.

### <Configuration of Defect Inspection Apparatus>

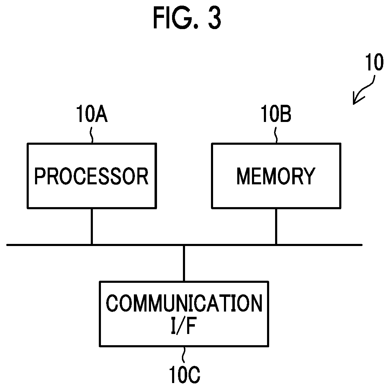

The defect inspection apparatus 10 is realized by at least one computer. FIG. 3 is a diagram showing a configuration of the defect inspection apparatus 10. As shown in FIG. 3, the defect inspection apparatus 10 comprises a processor 10A, a memory 10B, and a communication interface 10C.

The processor 10A executes a instruction stored in the memory 10B. A hardware structure of the processor 10A is various processors as shown below. The various processors include a central processing unit (CPU) that is a general-purpose processor that executes software (program) to operate as various functional units, a graphics processing unit (GPU) that is a processor specialized in image processing, a programmable logic device (PLD) that is a processor of which a circuit configuration can be changed after manufacture, such as a field programmable gate array (FPGA), and a dedicated electric circuit that is a processor having a circuit configuration designed for exclusive use in order to execute specific processing, such as an application specific integrated circuit (ASIC).

One processing unit may be configured by one of the various types of processors or may be configured by the same type or different types of two or more processors (for example, a plurality of FPGAs, a combination of a CPU and an FPGA, or a combination of a CPU and a GPU). In addition, one processor may configure a plurality of functional units. As a first example in which the plurality of functional units are configured by one processor, as represented by a computer such as a client or a server, there is a form in which one processor is configured by a combination of one or more CPUs and software, and this processor operates as the plurality of functional units. Second, there is a form in which a processor that realizes functions of the entire system including a plurality of functional units with one integrated circuit (IC) chip is used, as represented by a system on chip (SoC) or the like. As described above, the various functional units are configured using one or more of the various processors as a hardware structure.

In addition, the hardware structure of these various processors is, more specifically, an electric circuit (circuitry) obtained by combining circuit elements such as semiconductor elements.

The memory 10B stores a instruction to be executed by the processor 10A. The memory 10B includes a random access memory (RAM) and a read only memory (ROM) (not illustrated). The processor 10A uses the RAM as a work area, executes software by using various programs including a defect inspection program stored in the ROM and parameters, and executes various types of processing of the defect inspection apparatus 10 by using the parameters stored in the ROM or the like.

The communication interface 10C controls communication with the overall control unit 174. The defect inspection apparatus 10 is connected to the overall control unit 174 via the communication interface 10C. The defect inspection apparatus 10 and the ink jet printing system 100 may be connected to each other via a local area network (LAN) or the like.

### [Functional Configuration of Defect Inspection Apparatus]

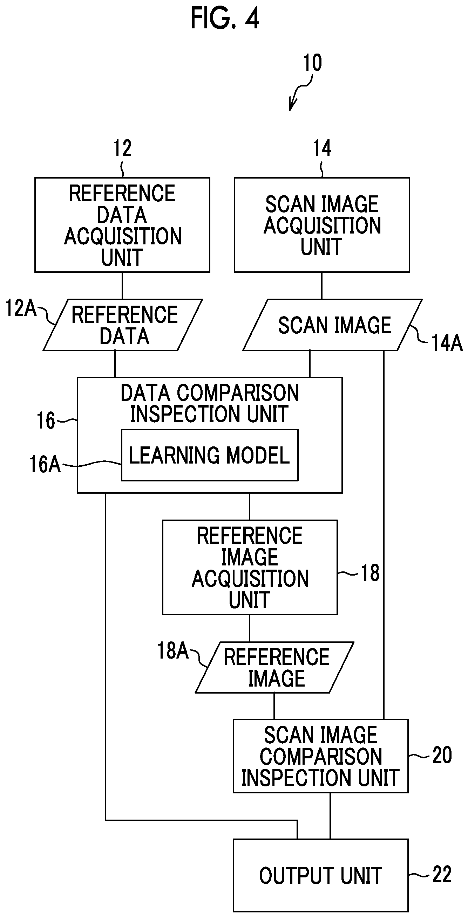

The defect inspection apparatus 10 is an apparatus that inspects a defect of a printed matter to be inspected and determines pass/fail of the printed matter to be inspected. FIG. 4 is a block diagram showing a functional configuration of the defect inspection apparatus 10. The defect inspection apparatus 10 includes a reference data acquisition unit 12, a scan image acquisition unit 14, a data comparison inspection unit 16, a reference image acquisition unit 18, a scan image comparison inspection unit 20, and an output unit 22.

The reference data acquisition unit 12 acquires reference data 12A generated based on print source data of a printed matter printed by the ink jet printing system 100. The reference data 12A may be image data before raster image processor (RIP) processing of the print source data or may be image data after the RIP processing. The reference data 12A may be stored in the storage unit 172.

The scan image acquisition unit 14 acquires a scan image 14A (an example of a "captured image") in which the printed matter printed in the ink jet printing system 100 is imaged. The scan image acquisition unit 14 may acquire the scan image 14A from the scanner 132 via the imaging control unit 180. The scan image acquisition unit 14 may acquire the scan image 14A by performing signal processing on the scan image acquired from the scanner 132. The scan image 14A is, for example, bitmap data.

The data comparison inspection unit 16 performs an inspection by a data comparison method of inspecting a defect of the printed matter by comparing the scan image in which the printed matter to be inspected is imaged with the reference data generated based on the print source data of the printed matter. Here, the data comparison inspection unit 16 inspects the printed matter of the scan image 14A by comparing the reference data 12A with the scan image 14A. In addition, the data comparison inspection unit 16 determines the pass/fail of the printed matter from a result of the inspection by the data comparison method.

The data comparison inspection unit 16 includes a learning model 16A. The learning model 16A is configured by, for example, a convolutional neural network (CNN). The learning model 16A outputs information on the defect of the scan image 14A in a case where the reference data 12A and the scan image 14A are input. The information on the defect includes at least one of the presence or absence of the defect, the number of defects, the position of the defect, or the size of the defect.

The learning model 16A is trained using, as training data, the reference data generated based on the print source data of the printed matter, the scan image of the printed matter, and a result of the inspection of the printed matter. The result of the inspection of the training data includes at least one of the presence or absence of the defect, the number of defects, the position of the defect, or the size of the defect. The result of the inspection of the training data includes a result of the inspection using a scan image comparison method described later. The result of the inspection of the training data may include a result of the inspection using the data comparison method.

For example, the data comparison inspection unit 16 acquires the presence or absence of the defect of the printed matter, determines that the printed matter is a non-defective product in a case where the defect is not present, and determines that the printed matter is a defective product in a case where the defect is present.

The data comparison inspection unit 16 may acquire the number of defects of the printed matter, determine that the printed matter is a non-defective product in a case where the number of defects is relatively small, and determine that the printed matter is a defective product in a case where the number of defects is relatively large.

The data comparison inspection unit 16 may acquire the position of the defect of the printed matter, determine that the printed matter is a non-defective product in a case where the position of the defect is relatively far from the center of the printed matter, and determine that the printed matter is a defective product in a case where the position of the defect is relatively close to the center of the printed matter.

The data comparison inspection unit 16 may acquire the size of the defect of the printed matter, determine that the printed matter is a non-defective product in a case where the size of the defect is relatively small, and determine that the printed matter is a defective product in a case where the size of the defect is relatively large.

The data comparison inspection unit 16 may acquire at least two of the presence or absence of the defect, the number of defects, the position of the defect, or the size of the defect, and determine the pass/fail of the printed matter.

The reference image acquisition unit 18 acquires a reference image 18A in which the correct printed matter for the defect inspection is imaged. That is, the reference image 18A is a scan image of the correct printed matter, and is, for example, bitmap data. The reference image 18A may be stored in the storage unit 172.

The scan image comparison inspection unit 20 inspects the defect of the printed matter by a scan image comparison method of inspecting the defect of the printed matter by comparing the scan image in which the printed matter to be inspected is imaged with the reference image in which the correct printed matter is imaged. Here, the scan image comparison inspection unit 20 inspects the printed matter of the scan image 14A by comparing the reference image 18A with the scan image 14A. The scan image comparison inspection unit 20 performs, for example, registration between the reference image 18A and the scan image 14A, and specifies the presence or absence of the defect from the difference between the reference image 18A and the scan image 14A. The scan image comparison inspection unit 20 may include a learning model 16A.

The output unit 22 outputs the inspection results of the data comparison inspection unit 16 and the scan image comparison inspection unit 20. The inspection result is input to the sorting control unit 184. The inspection result may be displayed on the display unit 171 or may be stored in the storage unit 172.

### <Defect Inspection Method>

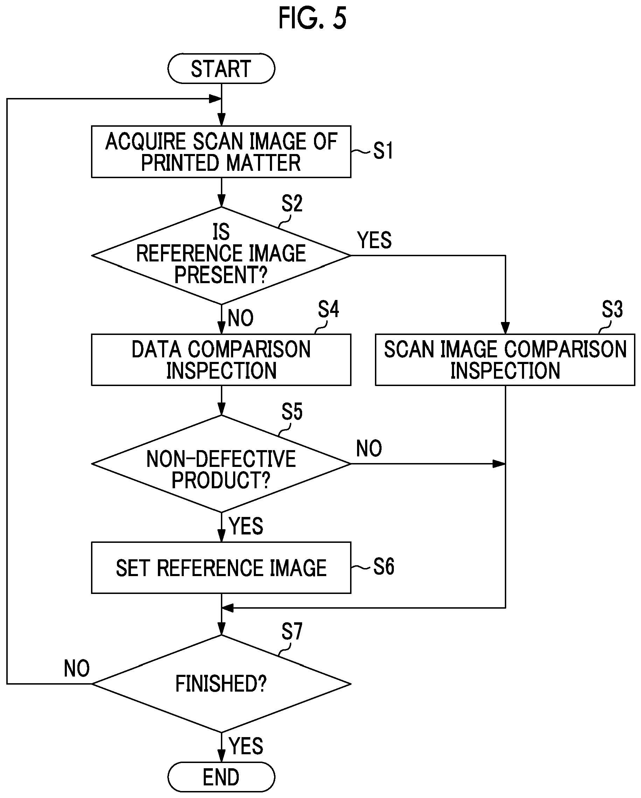

FIG. 5 is a flowchart showing each step of the defect inspection method by the defect inspection apparatus 10. The defect inspection method is realized by the processor 10A executing the defect inspection program stored in the memory 10B. The defect inspection program may be provided by a computer-readable non-transitory storage medium. In this case, the defect inspection apparatus 10 may read the defect inspection program from the non-transitory storage medium and store the defect inspection program in the memory 10B.

Here, an example of inspecting a plurality of printed matters continuously printed based on one print source data will be described. First, the ink jet printing system 100 sequentially prints a plurality of printed matters based on the print source data. The defect inspection apparatus 10 inspects each printed matter during the printing of the plurality of printed matters.

In step S1, the defect inspection apparatus 10 acquires a scan image 14A of a first printed matter. That is, the printing unit 120 of the ink jet printing system 100 forms an image on the first paper P transported by the transport unit 110 to generate the first printed matter. The imaging unit 130 images the first printed matter. The scan image acquisition unit 14 of the defect inspection apparatus 10 acquires the scan image 14A of the first printed matter from the imaging unit 130.

In step S2, the defect inspection apparatus 10 determines whether or not a reference image 18A corresponding to the print source data is present in the storage unit 172. The reference image 18A is not set at the start of printing and is not stored in the storage unit 172. Here, it is determined that the reference image 18A is not present, and the process proceeds to step S4.

In step S4, the defect inspection apparatus 10 inspects the first printed matter by a data comparison inspection method. That is, the reference data acquisition unit 12 acquires reference data 12A corresponding to the print source data from the storage unit 172. The data comparison inspection unit 16 inputs the reference data 12A and the scan image 14A to the learning model 16A to acquire information on a defect of the first printed matter. Here, the data comparison inspection unit 16 acquires the presence or absence of a defect of the first printed matter, determines that the first printed matter is a non-defective product in a case where the defect is not present, and determines that the first printed matter is a defective product in a case where the defect is present. The output unit 22 outputs an inspection result of the data comparison inspection unit 16. The overall control unit 174 of the ink jet printing system 100 displays the inspection result on the display unit 171.

In step S5, the defect inspection apparatus 10 determines whether or not the first printed matter is a non-defective product. In a case where the first printed matter is a non-defective product, the process proceeds to step S6. In a case where the first printed matter is a defective product, the process proceeds to step S7.

In step S6, the defect inspection apparatus 10 sets the reference image 18A. Here, since the first printed matter is determined to be a non-defective product, the reference image acquisition unit 18 sets the scan image 14A of the first printed matter as the reference image 18A. In addition, the reference image acquisition unit 18 stores the set reference image 18A in the storage unit 172.

In a case where the reference image 18A is set in step S6 or in a case where the first printed matter is a defective product in step S5, the defect inspection apparatus 10 determines whether or not all printing is finished in step S7. In a case where all printing is not finished, the process proceeds to step S1. In a case where all printing is finished, the process of the present flowchart is finished.

In step S1 to which the process proceeds again, the defect inspection apparatus 10 acquires the scan image 14A of the second printed matter. That is, the printing unit 120 of the ink jet printing system 100 forms an image on the second paper P transported by the transport unit 110 to generate the second printed matter. The imaging unit 130 images the second printed matter. The scan image acquisition unit 14 of the defect inspection apparatus 10 acquires the scan image 14A of the second printed matter from the imaging unit 130.

In step S2, the defect inspection apparatus 10 determines whether or not the reference image 18A is present. In a case where the first printed matter is a non-defective product, the scan image 14A of the first printed matter is set as the reference image 18A in step S6. Therefore, in this case, the process proceeds to step S3.

In step S3, the defect inspection apparatus 10 inspects the second printed matter by the scan image comparison inspection method. That is, the reference image acquisition unit 18 acquires the reference image 18A from the storage unit 172. The scan image comparison inspection unit 20 compares the reference image 18A with the scan image 14A to acquire the defect information of the second printed matter. Here, the scan image comparison inspection unit 20 acquires the presence or absence of the defect of the second printed matter, determines that the second printed matter is a non-defective product in a case where the defect is not present, and determines that the second printed matter is a defective product in a case where the defect is present. The output unit 22 outputs an inspection result of the data comparison inspection unit 16. The overall control unit 174 of the ink jet printing system 100 displays the inspection result on the display unit 171. Thereafter, the process proceeds to step S7.

In this way, after the reference image 18A is set, the defect inspection apparatus 10 inspects the defect of the printed matter by the scan image comparison method using the reference image 18A. Here, the defect inspection apparatus 10 inspects the printed matter to be inspected next to the printed matter of the scan image set as the reference image 18A by the scan image comparison method.

On the other hand, in a case where the first printed matter is a defective product, the reference image 18A is not present. Therefore, in this case, the process proceeds from step S2 to step S4.

In step S4, the defect inspection apparatus 10 inspects the second printed matter by the data comparison inspection method. That is, the data comparison inspection unit 16 inputs the reference data 12A and the scan image 14A to the learning model 16A to acquire the information on the defect of the second printed matter. Here, the data comparison inspection unit 16 acquires the presence or absence of the defect of the second printed matter, determines that the second printed matter is a non-defective product in a case where the defect is not present, and determines that the second printed matter is a defective product in a case where the defect is present.

In step S5, the defect inspection apparatus 10 determines whether or not the second printed matter is a non-defective product. In a case where the second printed matter is a non-defective product, the process proceeds to step S6.

In step S6, the defect inspection apparatus 10 sets the reference image 18A. Here, since the second printed matter is determined to be a non-defective product, the reference image acquisition unit 18 sets the scan image 14A of the second printed matter as the reference image 18A. In addition, the reference image acquisition unit 18 stores the set reference image 18A in the storage unit 172. Thereafter, the process proceeds to step S7. The following processes are the same.

In this way, in a case where the scan image 14A of the second printed matter is set as the reference image 18A, the defect inspection apparatus 10 inspects the third and subsequent printed matters by the scan image comparison method. On the other hand, in a case where the second printed matter is a defective product, the defect inspection apparatus 10 inspects the third printed matter again by the data comparison method. That is, the defect inspection apparatus 10 inspects the printed matters by the data comparison method until the reference image is set, sets the scan image of the non-defective product in the inspection by the data comparison method as the reference image, and then inspects the printed matters by the scan image comparison method using the reference image. Accordingly, the inspection is automatically performed on all the printed matters.

Here, an example has been described in which the printed matter is printed and inspected, and then the next printed matter is printed and inspected, but the ink jet printing system 100 may sequentially inspect the printed matters that are sequentially printed, and the timing of printing and the timing of inspection are optional. For example, the printing unit 120 may start the second printed matter before the defect inspection apparatus 10 inspects the first printed matter. Even in this case, the inspection by the scan image comparison method can be performed on the printed matter that is the next to the printed matter to be inspected of the captured image set as the reference image 18A.

In addition, here, an example has been described in which a plurality of printed matters that are continuously printed based on one print source data are inspected, but it is also possible to inspect a plurality of types of printed matters that are continuously printed based on a plurality of print source data. In this case, the defect inspection apparatus 10 sets the reference image for each print source data.

Hereinafter, an example will be described in which 100 copies of 10 collations of which the print source data are different from each other are printed. In this case, 10 print source data are present, and all 10 reference images corresponding to the 10 print source data are set.

In order to print 100 copies of 10 collations, there are a case of stack printing in which 100 sheets of the first collation are printed, 100 sheets of the second collation are printed, ..., and 100 sheets of the 100th collation are printed, and a case of collate printing in which the first collation of the first copy, the second collation of the first copy, ..., the 100th collation of the first copy, the first collation of the second copy, the second collation of the second copy, ..., and the 100th collation of the second copy are repeated up to 100 copies.

In the case of the stack printing, the defect inspection apparatus 10 inspects up to the 100th sheet of the first collation by the scan image comparison method after the reference image is set, and inspects the 100th sheet of the first collation after the reference image is set by the scan image comparison method. Similarly, the defect inspection apparatus 10 inspects up to the 100th sheet of the second collation by the scan image comparison method after the reference image is set, and inspects the 100th sheet of the second collation after the reference image is set by the scan image comparison method. By repeating this up to the 100th collation, it is possible to inspect all the printed matters.

On the other hand, in the case of the collate printing, the defect inspection apparatus 10 inspects the first to 100th collation of the first copy by the data-image comparison inspection. For example, in a case where a defect is detected only in the second collation of the first copy, the defect inspection apparatus 10 inspects the second collation by the data-image comparison inspection and inspects the other collations by the scan image comparison method in the inspection of the second copy. In addition, in a case where the second collation of the second copy is a non-defective product, the defect inspection apparatus 10 inspects all the first to 100th collation of the third copy by the scan image comparison inspection. As a result, it is possible to perform the same inspection.

As described above, in the defect inspection method according to the present disclosure, first, the inspection is performed by the data-image comparison inspection, the scan image of the printed matter in which no defect is present in the data-image comparison inspection is automatically set as the reference image without depending on the user operation, and the inspection is performed by the scan image comparison method thereafter.

As a result, even in a case where the inspection performance of the data-image comparison inspection is lower than that of the scan image comparison method, that is, in a case where the detection accuracy of the defect in the data-image comparison inspection is lower than that of the scan image comparison method, it is possible to perform the total inspection that compensates for the disadvantage by setting the reference image by performing the data-image comparison inspection only for the reference image.

### <Other>

The recording medium is not limited to the single-sheet paper P and may be continuous paper. The paper P is not limited to the paper medium and may be a resin sheet, a metal sheet, or the like. In addition, the transport of the recording medium is not limited to the belt transport and may be a drum transport method of transporting the paper P by using a plurality of transport drums.

Further, here, the printing by the single-pass method has been described as an example, but a shuttle scan method (also referred to as a "serial head method") of performing the printing by scanning the head a plurality of times while moving a short recording head may be used. In addition, here, the ink jet printing system by the ink jet method has been described as an example, but the printing method is not limited to the ink jet method and may be a printing method such as offset printing, gravure printing, or letterpress printing.

The technical scope of the present invention is not limited to the scope described in the above-described embodiments. The configurations and the like in each embodiment can be appropriately combined between the respective embodiments without departing from the spirit of the present invention.

### Explanation of References

10: defect inspection apparatus
10A: processor
10B: memory
10C: communication interface
12: reference data acquisition unit
12A: reference data
14: scan image acquisition unit
14A: scan image
16: data comparison inspection unit
16A: learning model
18: reference image acquisition unit
18A: reference image
20: scan image comparison inspection unit
22: output unit
100: ink jet printing system
110: transport unit
112: upstream pulley
114: downstream pulley
116: transport belt
120: printing unit
122C: ink jet head
122K: ink jet head
122M: ink jet head
122Y: ink jet head
130: imaging unit
132: scanner
140: drying unit
142: heater
150: sorting unit
152: stamper
160: sheet discharge unit
162: sheet discharge tray
170: input unit
171: display unit
172: storage unit
174: overall control unit
176: transport control unit
178: print control unit
180: imaging control unit
182: drying control unit
184: sorting control unit
186: sheet discharge control unit
P: paper
S1 to S7: step of defect inspection method

## Claims

1. A printed matter defect inspection apparatus that inspects each of a plurality of printed matters that are continuously printed at any time by a scan image comparison method of comparing a captured image obtained by imaging a printed matter to be inspected with a reference image obtained by imaging a correct printed matter to inspect a defect of the printed matter to be inspected, the printed matter defect inspection apparatus comprising:
one or more processors; and
one or more memories in which a program to be executed by the one or more processors is stored,
wherein the one or more processors, by executing instructions of the program, are configured to:
inspect a defect of the printed matter by a data comparison method of comparing a captured image obtained by imaging a printed matter to be inspected with reference data generated based on print source data of the printed matter;
determine whether or not the printed matter is defective from a result of the inspection by the data comparison method; and
set a captured image of the printed matter as the reference image when it is determined that the printed matter is not defective.

2. The printed matter defect inspection apparatus according to claim 1,
wherein the one or more processors are configured to:
inspect each of the plurality of printed matters that are continuously printed, by the data comparison method, until the reference image is set; and
inspect by the scan image comparison method after the reference image is set.

3. The printed matter defect inspection apparatus according to claim 2,
wherein the one or more processors are configured to inspect, by the scan image comparison method, a printed matter to be inspected next to the printed matter of the captured image set as the reference image.

4. The printed matter defect inspection apparatus according to claim 1,
wherein the one or more processors are configured to set the reference image for each print source data.

5. The printed matter defect inspection apparatus according to claim 1,
wherein the one or more processors are configured to inspect by the data comparison method using a learning model.

6. The printed matter defect inspection apparatus according to claim 5,
wherein the learning model is trained using, as training data, reference data generated based on print source data of a printed matter, a captured image of the printed matter, and an inspection result of the printed matter.

7. The printed matter defect inspection apparatus according to claim 6,
wherein the result of the inspection includes a result of the inspection by the scan image comparison method.

8. The printed matter defect inspection apparatus according to claim 6,
wherein the result of the inspection includes at least one of presence or absence of a defect, the number of defects, a position of a defect, or a size of a defect.

9. A printing system comprising:
a printing apparatus that prints a printed matter based on print source data;
an imaging device that images the printed matter to acquire a captured image; and
the printed matter defect inspection apparatus according to any one of claims 1 to 8.

10. A printed matter defect inspection method that inspects each of a plurality of printed matters that are continuously printed at any time by a scan image comparison method of comparing a captured image obtained by imaging a printed matter to be inspected with a reference image obtained by imaging a correct printed matter to inspect a defect of the printed matter to be inspected, the method comprising:
by one or more processors,
inspecting a defect of the printed matter by a data comparison method of comparing a captured image obtained by imaging a printed matter to be inspected with reference data generated based on print source data of the printed matter;
determining whether or not the printed matter is defective from a result of the inspection by the data comparison method; and
setting a captured image of the printed matter as the reference image when it is determined that the printed matter is not defective.

11. A program causing a computer to execute the printed matter defect inspection method according to claim 10.

12. A non-transitory computer-readable recording medium on which the program according to claim 11 is recorded.
